Europäisches Patentamt

European Patent Office

Office européen des brevets

(11) Veröffentlichungsnummer: **0 503 372 A1**

# EUROPÄISCHE PATENTANMELDUNG

(21) Anmeldenummer: **92103278.5**

(22) Anmeldetag: **26.02.92**

(51) Int. Cl.5: **B01D 46/04**, B01D 29/11, B01D 29/72

(30) Priorität: **27.02.91 PL 289209**
**27.02.91 PL 92123**

(43) Veröffentlichungstag der Anmeldung:
**16.09.92 Patentblatt 92/38**

(84) Benannte Vertragsstaaten:
**AT BE CH DE DK FR GB IT LI NL SE**

(71) Anmelder: **Krajewski, Jan**
**os. Piastow 52/34**
**Krakow(PL)**
Anmelder: **Trzeciak, Zdzislaw**
**os. Tysiaclecia 31/48**
**Krakow(PL)**
Anmelder: **Wojcieski, Jerzy**
**os. Centrum B 2/21**
**Krakow(PL)**

(72) Erfinder: **Krajewski, Jan**
**os. Piastow 52/34**
**Krakow(PL)**
Erfinder: **Trzeciak, Zdzislaw**
**os. Tysiaclecia 31/48**
**Krakow(PL)**
Erfinder: **Wojcieski, Jerzy**
**os. Centrum B 2/21**
**Krakow(PL)**

(74) Vertreter: **Finck, Dieter et al**
**Patentanwälte v. Füner, Ebbinghaus, Finck**
**Mariahilfplatz 2 & 3**
**W-8000 München 90(DE)**

(54) Gewebesackfiltervorrichtung mit Regenerationseinrichtung für Filtersäcke.

(57) Die Gewebesackfiltervorrichtung mit Regenerationseinrichtung für Filtergewebesäcke besteht aus einem Filtergehäuse 1, welches einen Filtratabführtrichter 2, einen Einlaß für Filtrat mitführendes Gas, ein Gassammelrohr (13) und einen damit verbundenen Auslaß für von Filtrat befreitem Gas aufweist. Das Sammelrohr 13 hat Stutzen 12, an denen die einen Enden der Filtergewebesäcke 11 befestigt sind. Die Regenerationseinrichtung wird von einem im wesentlichen parallel zum Sammelrohr 13 angeordneten Träger 3 gebildet, dessen Enden über Federn 4, 5 am Filtergehäuse 1 gehalten sind. An dem Träger 3 greift stirnseitig eine Vibrationseinrichtung 9 an. Er trägt ferner wenigstens ein Vibrationselement 10 und ist über Spannelemente 14, die direkt an ihm oder an einem zugehörigen Vibrationselement 10 angreifen können, mit den anderen Enden der Filtergewebesäcke 11 gekoppelt, die dadurch gespannt werden. Die Vibrationseinrichtung 9 und das Vibrationselement 10 oder die Vibrationselemente 10 sind gemeinsam oder einzeln betätigbar. Dadurch kann während des Betriebs der Gewebesackfiltervorrichtung eine dauernde oder zeitlich beabstandete Regeneration der Filtergewebesäcke 11 durchgeführt werden.

Die Erfindung betrifft eine Gewebesackfiltervorrichtung mit Regenerationseinrichtung für Filtersäcke, bestehend aus einem Filtergehäuse, welches einen Filtratabführtrichter, einen Einlaß für Filtrat mitführendes Gas, ein Gassammelrohr mit Stutzen zum Befestigen der einen Enden der Filtergewebesäcke und einen mit dem Gassammelrohr verbundenen Auslaß für von Filtrat befreitem Gas aufweist und aus einer den anderen Enden der Filtergewebesäcke zugeordneten Spanneinrichtung.

Zur Regenerierung der Filtergewebesäcke für den erneuten Einsatz ist es bekannt, Luft durch die Säcke durchzublasen. Das Durchblasen kann dabei impulsartig im Gegenstrom erfolgen, während gleichzeitig Staub von den Filterflächen abgeschüttelt wird. Das Abschütteln erfolgt mit Hilfe meachanischer Einrichtungen, welche die Filtersäcke in Schwingungen versetzen.

Aus der PL-PS 123 352 ist es beispielsweise bekannt, einen Vorhang beweglich zu lagern und mit Hilfe von Hebeln und Gegengewicht so zu bewegen, daß zur Beseitigung der Verunreinigungen auf den Filterflächen die durchgeblasene Luft einen impulsartigen Gegenstrom erzeugt.

Aus der PL-PS 130 654 ist ferner bekannt, zur Erzeugung eines impulsartigen Durchblasstroms ein elektromagnetisch betätigbares Ventil einzusetzen, das die Einschalt- und Ausschaltimpulse über ein Hilfsrelais von einem Steuergerät erhält, das über eine Scheibe von einer Welle der Filteranlage angetrieben wird.

Gemäß der PL-PS 148 298 werden die Filtergewebesäcke durch Durchblasen gereinigt, wobei Pulsatoren verwendet werden, die an Hochdruckbehälter angeschlossen sind. Dabei sind zwischen den Pulsatorausgängen und den Filterköpfen direkt vor den Filterköpfen Entspannungsdüsen angeordnet, um die kinetische Energie der sich entspannenden Luft auszunützen.

Die bekannten Regenerierungsmethoden erfordern ein zyklisches Ausschalten der Gewebesackfiltervorrichtungen im Normalbetrieb für die Dauer des Durchblasens. Die für die Aufbereitung und Verdichtung der Durchblasluft erforderlichen Anlagen einschließlich Druckbehälter sind sehr aufwendig.

Die der Erfindung zugrundeliegende Aufgabe besteht deshalb darin, die Gewebesackfiltervorrichtung mit Regenerationseinrichtung für Filtergewebesäcke der eingangs genannten Art so auszugestalten, daß auf einfache Weise ohne Unterbrechung des Filtrierbetriebs eine kontinuierliche oder diskontinuierliche Entfernung von Filtrat, insbesondere Staubteilchen, von den Filtergewebesäcken gewährleistet ist.

Diese Aufgabe wird ausgehend von der Gewebesackfiltervorrichtung mit Regenerationseinrichtung für Filtergewebesäcke der eingangs genannten Art dadurch gelöst, daß die Spanneinrichtung die Regenerationseinrichtung bildet und einen im wesentlichen parallel zum Sammelrohr angeordneten Träger aufweist, dessen Enden über Federn am Filtergehäuse gehalten sind, der wenigstens ein Vibrationselement trägt und über Spannelemente mit den anderen Enden der Filtergewebesäcke gekoppelt ist und an dem stirnseitig eine Vibrations-Einrichtung angreift, wobei die Vibrationselemente und die Vibrationseinrichtung gemeinsam oder einzeln betätigbar sind.

Die erfindungsgemäße Gewebesackfiltervorrichtung mit Regenerationseinrichtung für Filtergewebesäcke ermöglicht es, während des Filtrierbetriebs für eine kontinuierliche oder diskontinuierliche Filtratentfernung zu sorgen, wobei das Filtrat, in der Regel auf den Filterflächen der Filtergewebesäcke aus Luft abgeschiedener Staub, in den Filtratabführtrichter fällt und dort gesammelt oder abgeführt wird. Die Betätigung der Vibrationselemente und der Vibrationseinrichtung erfolgt über an sich bekannte elektrische Steuersysteme.

Zweckmäßigerweise sind die Vibrationselemente für eine Vertikalschwingung der Filtergewebesäcke vorgesehen.

Die Vibrationseinrichtung ist bevorzugt für eine Horizontalschwingung des Trägers vorgesehen.

Das Sammelrohr kann austauschbar angeordnet sein, so daß dann, wenn die Filtersäcke ausgetauscht werden müssen, lediglich die Spannelemente gelöst zu werden brauchen. Das Sammelrohr kann dann mit den Filtersäcken als Einheit entfernt und durch eine neue Einheit mit neuen Filtergewebesäcken ersetzt werden, so daß die Stillstandszeit des Gewebesackfilters nur sehr kurz ist.

Bei einer vorteilhaften Ausführungsform der erfindungsgemäßen Gewebesackfiltervorrichtung befinden sich das Sammelrohr und der Auslaß für von Filtrat befreites Gas im oberen Teil des Filtergehäuses, während der Einlaß für Filtrat mitführendes Gas und der Träger im unteren Teil des Filtergehäuses über dessen Filterabführtrichter angeordnet sind.

Die Spannelemente können direkt mit dem Träger verbunden sein. In diesem Fall weist der Träger wenigstens ein Vibrationselement auf, das für die erforderliche Schwingbewegung sorgt.

Anhand einer Zeichnung, in der schematisch im Längsschnitt eine Ausführungsform der Gewebesackfiltervorrichtung mit Regenerationseinrichtung für Filtergewebesäcke gezeigt ist, wird die Erfindung näher erläutert.

Die Gewebesackfiltervorrichtung, die zur Abscheidung von Staubteilchen aus Luft verwendet werden soll, hat ein Filtergehäuse 1 mit einem Einlaß für die staubbeladene Luft in seinem unteren Teil und einem an ihm unten angebrachten Filtratabführtrichter 2. In seinem oberen Teil hat das Filtergehäuse 1 ein Gassammelrohr 13 mit einer Vielzahl von Stutzen 12, das in einen Auslaß für die Luft mündet. An den Stutzen 12 sind Filtergewebesäcke 11 befestigt, die sich in dem Filtergehäuse 1 vertikal nach unten in Richtung eines Trägers 3 erstrecken, der im wesentlichen parallel zu dem Gassammelrohr 13 angeordnet ist.

Der Träger 3 ist mit seinem einen Ende an dem einen Schenkel einer U-förmigen gebogenen Feder 4 festgelegt, deren anderes Ende am Filtergehäuse 1 befestigt ist. Im Bereich des anderen Endes ist der Träger 3 über Schrauben 8 mit einer Feder 5 gekoppelt, die am Filtratsammeltrichter 2 befestigt ist. Das andere Ende des Trägers 3 ist über einen Balg 6 und ein Balggehäuse 7 abgedichtet aus dem Filtergehäuse 1 herausgeführt und mit einer Vibrationseinrichtung 9 verbunden, die bei dem gezeigten Ausführungsbeispiel den Träger 3 in eine Horizontalschwingung versetzen kann, was durch den Doppelpfeil in Horizontalrichtung veranschaulicht ist.

Auf dem Träger 3 sind im Bereich des freien Endes eines jeden Filtergewebesacks 11 Vibrationselemente 10 angeordnet, von denen jedes über ein Spannelement 14 mit dem freien Ende des zugeordneten Filtersacks 11 verbunden ist und dadurch als Spanneinrichtung für den zugeordneten Filtergewebesack 11 dient.

Bei dem gezeigten Ausführungsbeispiel sorgen die Vibrationselemente 6 für die Übertragung einer vertikalen Schwingbewegung auf die Filtergewebesäcke 11, was durch die vertikalen Doppelpfeile veranschaulicht ist. Die Zuführung der staubbeladenen Luft ist durch den halb hellen, halb dunklen Pfeil, die Abführung der von Staub befreiten Luft durch den hellen Pfeil veranschaulicht, während die Staubabführung durch den dunklen Pfeil angezeigt ist. Die Erzeugung der jeweiligen Schwingbewegungen am Träger 3 und an den Vibrationselementen 10 kann mechanisch, hydraulisch, pneumatisch, elektrisch oder auch piezoelektrisch erfolgen.

Bei der gezeigten Gewebesackfiltervorrichtung setzen sich im Betrieb die Staubteilchen hauptsächlich im unteren Teil der Filtergewebesäcke 11 ab, also in unmittelbarer Nähe der Stelle, wo die Schwingbewegungen durch die Vibrationselemente 10 und/oder durch die Vibrationseinrichtung 9 über den Träger 3 zur Einwirkung gelangen, was eine zuverlässige Entfernung der außen an den Filtergewebesäcken abgeschiedenen Staubteilchen gewährleistet.

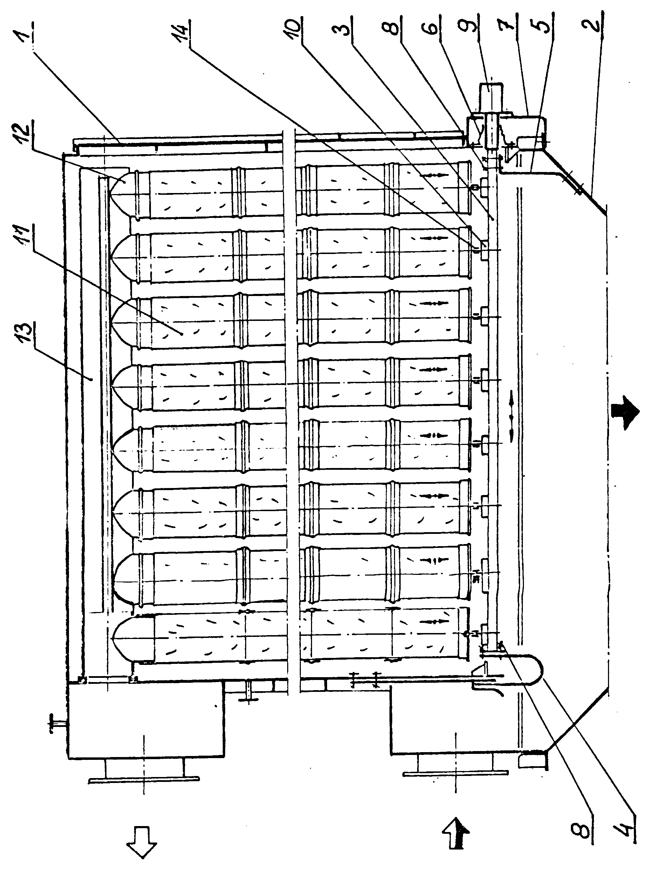

**Patentansprüche**

1. Gewebesackfiltervorrichtung mit Regenerationseinrichtung für Filtergewebesäcke (11), bestehend

- aus einem Filtergehäuse (1), welches einen Filtratabführtrichter (2), einen Einlaß für filtratmitführendes Gas, ein Gassammelrohr (13) und einen damit verbundenen Auslaß für von Filtrat befreitem Gas aufweist,
- aus mit dem Gassammelrohr (13) verbundenen Stutzen (12) zum Befestigen der einen Enden der Filtergewebesäcke (11) und
- aus einer den anderen Enden der Filtergewebesäcke (11) zugeordneten Spanneinrichtung,

dadurch **gekennzeichnet,**

- daß die Spanneinrichtung die Regenerationseinrichtung bildet und einen im wesentlichen parallel zum Sammelrohr (13) angeordneten Träger (3) aufweist,
-- dessen Enden über Federn (4, 5) am Filtergehäuse (1) gehalten sind,
-- der wenigstens ein Vibrationselement (10) trägt und über Spannelemente (14) mit den anderen Enden der Filtergewebesäcke (11) gekoppelt ist und
-- an dem stirnseitig eine Vibrationseinrichtung (9) angreift,
-- wobei das Vibrationselement (10) und die Vibra tionseinrichtung (9) gemeinsam oder einzeln betätigbar sind.

2. Gewebesackfiltervorrichtung nach Anspruch 1, dadurch gekennzeichnet, daß der Träger (3) ein jedem Filtergewebesack (11) zugeordnetes Vibrationselement (10) trägt, das über ein Spannelement (14) mit dem zugeordneten Filtergewebesack (11) verbunden ist.

3. Gewebesackfiltervorrichtung nach Anspruch 1 oder 2, dadurch gekennzeichnet, daß das Vibrationselement (10) oder die Vibrationselemente (10) für eine Vertikalschwingung der Filtergewebesäcke (11) vorgesehen ist oder sind.

4. Gewebesackfiltervorrichtung nach einem der Ansprüche 1 bis 3, dadurch gekennzeichnet, daß die Vibrationseinrichtung (9) für eine Horizontalschwingung des Trägers (3) vorgesehen ist.

5. Gewebesackfiltervorrichtung nach einem der vorhergehenden Ansprüche, dadurch gekennzeichnet, daß das Sammelrohr (13) austauschbar angeordnet ist.

6. Gewebesackfiltervorrichtung nach einem der vorhergehenden Ansprüche, dadurch gekennzeichnet, daß das Sammelrohr (11) und der Auslaß für von Filtrat befreitem Gas im oberen Teil des Filtergehäuses (1) und der Einlaß für Filtrat mitführendes Gas und der Träger (3) im unteren Teil des Filtergehäuses (1) über dessen Filtratabführtrichter (2) angeordnet sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2 219 801 (S.A. DES ETABLISSEMENTS NEU) <br> * Seite 1 - Seite 5 * <br> --- | 1-6 | B01D46/04 <br> B01D29/11 <br> B01D29/72 |
| Y | DE-A-115 332 (ERNST HANSEN) <br> * Seite 1 - Seite 2 * <br> --- | 1-6 | |
| Y | US-A-4 618 353 (GERALD J. REIER) <br> * Spalte 1 - Spalte 6 * <br> --- | 1-6 | |
| A | US-A-3 399 777 (PASSALAQUE) <br> * Spalte 1 - Spalte 12 * <br> --- | 1-6 | |
| A | FR-A-1 436 708 (GAUTHIER) <br> * Seite 1 - Seite 3 * <br> --- | 1-6 | |
| A | US-A-3 262 568 (EDGAR L. ZEHRBACH) <br> * Spalte 1 - Spalte 6 * <br><br> ----- | 1-6 | |

| RECHERCHIERTE SACHGEBIETE (Int. Cl.5) |
|---|
| B01D |

Der vorliegende Recherchenbericht wurde für alle Patentansprüche erstellt

| Recherchenort | Abschlußdatum der Recherche | Prüfer |
|---|---|---|
| DEN HAAG | 12 JUNI 1992 | DE PAEPE P.F.J. |